# EUROPEAN PATENT SPECIFICATION

(11) **EP 4 442 341 B1**
(45) Date of publication and mention of the grant of the patent: **22.10.2025**
(21) Application number: 23215425.2
(22) Date of filing: 11.12.2023
(51) Int. Cl.: A63H 23/10, A63B 37/00, A63B 39/08, A63H 33/18

(54) **TOY WATER BALL**
SPIELBALL
BALLON D'EAU JOUET

(30) Priority: 07.04.2023 CN 202320769008 U
(43) Date of publication of application: 09.10.2024
(73) Proprietor: Shenzhen Huamingjun Rubber Co., Ltd., Shenzhen, Guangdong (CN)
(72) Inventor: Xiong, Bin, Dongguan (CN)
(74) Representative: Mirlach, Xiaolu

(56) References cited:
- EP-A1- 4 094 816
- CN-U- 201 543 247
- US-A- 4 212 460
- US-A1- 2020 184 852

## Description

### TECHNICAL FIELD

The present application relates to the field of water toys, in particular to a toy water ball.

### BACKGROUND

As a summer activity to cool off the heat, water fights are very popular because of their interactive and entertaining features.

Water fights usually use balloons as water carriers. When a balloon filled with water collides with a player, the balloon will burst and the player will be wetted. However, the balloon cannot be reused and is not environmentally friendly, therefore the research and development personnel have developed a toy water ball that can be recycled. This toy water ball includes two shells and each shell includes a mounting frame, a magnetic member installed on the mounting frame and a water pocket. When two mounting frames attract each other by the magnetic members, the two shells will jointly define a cavity for storing water. When the toy water ball hits the player, the two shells will be separated by force, causing the hit player to be wet by water.

The prior art provides installation grooves on the mounting frame and assembles the magnetic members into the installation grooves in order to mount the magnetic members on the mounting frame, which causes the magnetic members to be stressed and come out of the notch of the installation grooves during water fights, causing the toy water ball to fail and the user experience to be poor.

EP 4094816 A1 discloses a toy water ball which includes a plurality of petals and can be filled with water in a common water source without a specific pressure.

### SUMMARY

The technical problem to be solved by the embodiment of the present application is to provide a toy water ball to solve the problem in the prior art that the magnetic member is easy to come out of the notch of the installation groove when the toy water ball is in use, resulting in failure of the toy water ball.

The toy water ball provided by the embodiment of the present application includes: at least two shells that are enclosable to form a water storage cavity, each of the shells including: a mounting frame, a magnetic member and a water pocket, the mounting frame comprising a first surface and a second surface oppositely arranged in a thickness direction thereof, the mounting frame being provided with an accommodation groove, a notch of the accommodation groove being located on the first surface, the magnetic member being installed in the accommodation groove, and the water pocket being connected to the first surface, and covering the notch of the accommodation groove on the first surface to seal the magnetic member in the mounting frame; wherein when the shells are enclosed to form the water storage cavity, magnetic members at corresponding positions on mounting frames of adjacent shells attract each other, so that second surfaces of adjacent mounting frames abut each other.

Furthermore, both the mounting frame and the water pocket are made of flexible materials.

Furthermore, the mounting frame is further provided with a gap groove, the gap groove is arranged on a periphery of the magnetic member and a notch of the gap groove is located on the first surface, a surrounding edge is formed between the accommodation groove and the gap groove to surround the magnetic member, and the water pocket is provided with an embedded part embedded in the gap groove.

Furthermore, the gap groove is located at a position close to an end of the magnetic member, and two ends of the gap groove extend from a direction parallel to the end of the magnetic member and to turn to a direction of a side surface of the magnetic member.

Furthermore, the mounting frame further includes a limiting baffle, and the limiting baffle is arranged at the notch of the accommodation groove, and is opposite to a groove bottom of the accommodation groove.

Furthermore, in a length direction of the accommodation groove, the limiting baffle is arranged at a middle position of the notch of the accommodation groove, so that a middle position of the magnetic member is covered by the limiting baffle, and two ends of the magnetic member are exposed from the notch of the accommodation groove.

Furthermore, the gap groove includes a first groove wall located on one side of the surrounding edge and a second groove wall opposite to the first groove wall, the mounting frame is further provided with a connection rib, and the connection rib connects the first groove wall and the second groove wall.

Furthermore, four corner positions of the magnetic member are all provided with gap grooves, and each gap groove is "L" shaped.

Furthermore, an inner ring of the mounting frame is provided with a warped edge at a position close to the second surface, and the warped edge extends towards a direction close to a center of the mounting frame and away from the first surface, and an angle between the warped edge and a plane where the second surface is located is ≥ 5 degrees, when the second surfaces of the adjacent mounting frames abut each other, corresponding warped edges of the adjacent mounting frames fit each other under pressure.

Furthermore, the toy water ball further includes a light-emitting assembly, wherein the light-emitting assembly is arranged inside the shells, and the light-emitting assembly comprises a lamp bead, a controller, a vibration sensor, and a battery for powering the lamp bead, the controller and the vibration sensor; the controller controls the lamp bead to work when the vibration sensor detects vibration.

Furthermore, an edge of the magnetic member is provided with a round chamfer.

Furthermore, an adhesive layer is provided between the magnetic member and the accommodation groove.

Furthermore, when the water pocket is connected to the first surface, a covering layer is formed on the first surface, and a thickness of the covering layer is ≥0.3 mm, a thickness from a bottom of the accommodation groove to the second surface is ≥0.3 mm, and a thickness of the mounting frame is ≥2 mm.

Compared with the prior art, the beneficial effect of the toy water ball provided by the embodiment of the present application is that the toy water ball provided by the embodiment of the present application includes at least two shells that are enclosable to form a water storage cavity. Each of the shells includes a mounting frame, a magnetic member and a water pocket mounted on the mounting frame. The mounting frame includes a first surface and a second surface oppositely arranged in a thickness direction thereof. When the shells are enclosed to define the water storage cavity, the magnetic members of adjacent shells attract each other, and the second surfaces of adjacent shells abut each other. Specially, the mounting frame is provided with an accommodation groove, a notch of the accommodation groove is located on the first surface, the magnetic member is installed in the accommodation groove, and the water pocket is connected to the first surface, and covers the notch of the accommodation groove on the first surface to seal the magnetic member in the mounting frame. Therefore, when the toy water ball provided by the embodiment is in use, the magnetic member will no longer be easy to come out of the installation groove under force as in the prior art, and the magnetic member will not get wet and rust. It can be seen that the toy water ball provided by the embodiment will not easily fail and has a long service life.

### BRIEF DESCRIPTION OF THE DRAWINGS

The invention is defined by the appended claims.

The specific embodiment of the present application will be described in further detail below in conjunction with accompanying drawing and embodiment, in the accompanying drawing:
Fig. 1 is a schematic diagram of the three-dimensional structure of the toy water ball provided by an embodiment of the present application;
Fig. 2 is a schematic diagram of the three-dimensional structure of the toy water ball provided by an embodiment of the present application, when the shells are separated;
Fig. 3 is a schematic diagram of the three-dimensional structure of the mounting frame and the connection structure provided by an embodiment of the present application;
Fig. 4 is a partially enlarged schematic diagram of position A in Fig. 3;
Fig. 5 is a schematic diagram of the three-dimensional structure of the magnetic member provided by an embodiment of the present application;
Fig. 6 is a schematic diagram of the toy water ball shown in Fig. 2, omitting the mounting frame and the connection structure;
Fig. 7 is a schematic diagram of the three-dimensional structure of the toy water ball provided by another embodiment of the present application, when the shells are separated;
Fig. 8 is a schematic diagram of the plane structure of the mounting frame and the connection structure provided by an embodiment of the present application;
Fig. 9 is a partially enlarged schematic diagram of position B in Fig. 8;
Fig. 10 is a schematic diagram of a partial structural of the mounting frame provided by another embodiment of the present application;
Fig. 11 is a schematic diagram of a partial structure of the mounting frame provided by another embodiment of the present application;
Fig. 12 is a cross-sectional view of the mounting frame and the connection structure provided by an embodiment of the present invention; and
Fig. 13 is a partially enlarged schematic diagram of position C in Fig. 12.

The reference numerals in the drawings are:
1000, Toy water ball;
100, Shell; 110, Mounting frame; 111, First surface; 112, Second surface; 113, Accommodation groove; 114, Gap groove; 1141, First groove wall; 1142, Second groove wall; 1143, Groove bottom; 115, surrounding edge; 116, limiting baffle; 117, connection rib; 118, Warped edge; 120, Magnetic member; 121, Round chamfer; 130, Water pocket; 131, Embedded part;
200. Connection structure.

### DETAILED DESCRIPTION

It should be noted that, in the case of no conflict, the embodiments in the present application and the features in the embodiments can be combined with each other. Now with reference to the accompanying drawings, the preferred embodiments of the present application are described in detail.

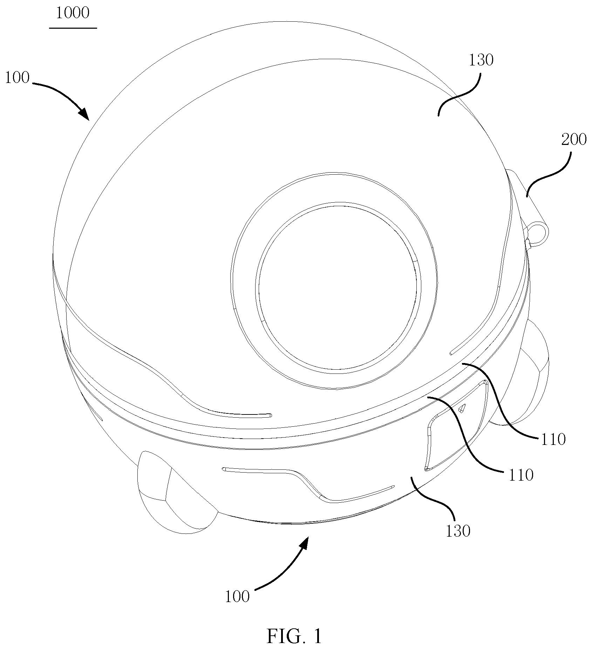

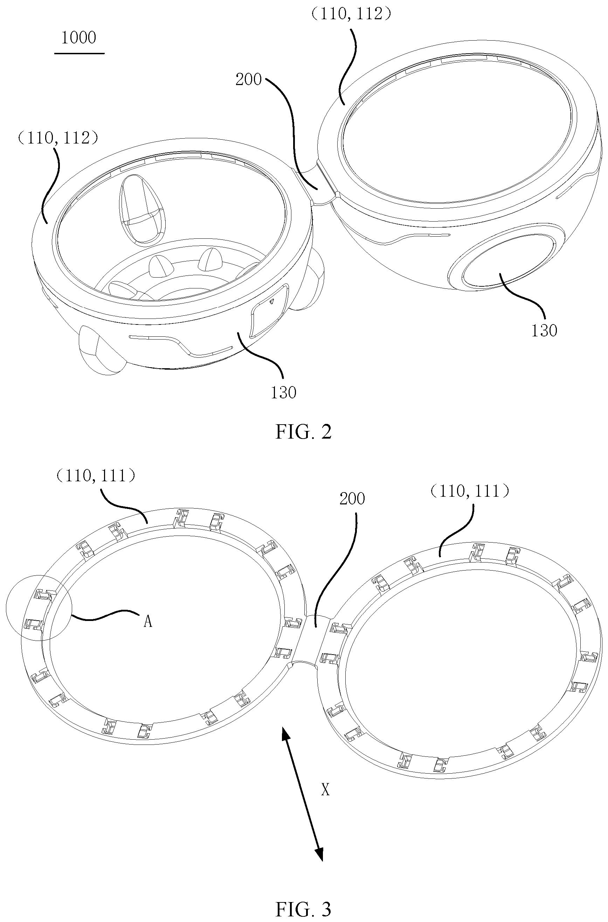

The embodiments of the present application provide a toy water ball 1000, as shown in Fig. 1 to Fig. 5, the toy water ball 1000 includes at least two shells 100 that are enclosable to form a water storage cavity. Each shell 100 includes a mounting frame 110, a magnetic member 120 and a water pocket 130. The mounting frame 110 includes a first surface 111 and a second surface 112 oppositely arranged in its thickness direction (X direction in FIG. 3). A notch of the accommodation groove 113 is located on the first surface 111, the magnetic member 120 is installed in the accommodation groove 113, and the water pocket 130 is connected to the first surface 111, and covers the notch of the accommodation groove 113 on the first surface 111 to seal the magnetic member 120 in the mounting frame 110.

The shells 100 in this embodiment can enclose to define a water storage cavity. At this time, the magnetic members 120 of adjacent shells 100 attract each other, so that the second surfaces 112 of adjacent shells 100 abut each other, thereby avoiding the overflow of water in the water storage cavity. When the toy water ball 1000 of the embodiments is thrown at the player, the toy water ball 1000 will be impacted by an external force, so that the water in the water storage cavity will overflow, causing the player hit by the toy water ball 1000 to be wet. Of course, it can be understood that hitting the player is only a reference method for playing the water ball. In addition to hitting the player, it is also possible to simply hit the toy water ball 1000 to the ground, wall or other places. This embodiment does not make a limitation here.

Specifically, since in this embodiment, the accommodation groove 113 for installing the magnetic member 120 is opened on the first surface 111, and the water pocket 130 is connected to the first surface 111, which makes the water pocket 130 seal the magnetic member 120 by cooperating with the mounting frame 110. This not only makes the magnetic member 120 not easy to come out of the accommodation groove 113 under force as in the prior art when the toy water ball 1000 is in use, but also prevents the magnetic member 120 from getting wet. It should be noted that the magnetic member 120 is prone to rust after being wetted by water, which makes the toy water ball 1000 unsuitable for continued use. It can be seen that, by implementing this embodiment, the service life of the toy water ball 1000 can be effectively extended, and the toy water ball 1000 will not easily fail.

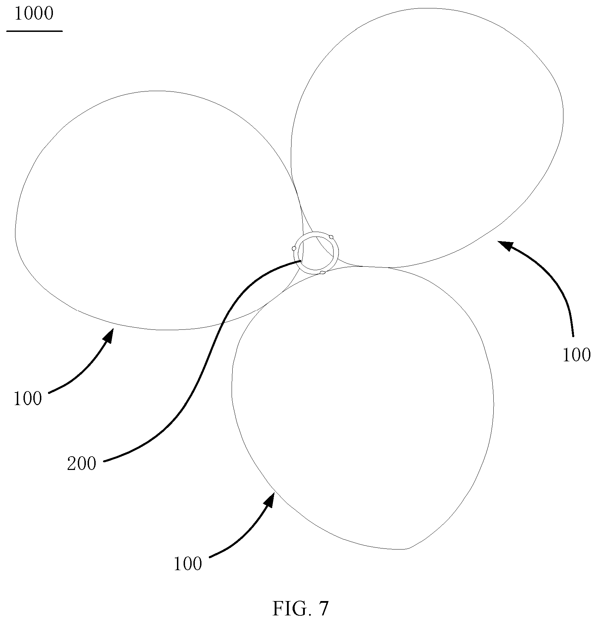

It is worth mentioning that since two shells 100 can be provided as in FIG. 1, three can be provided as in FIG. 7, four or five can be provided, and this embodiment does not make a limitation here.

Referring to FIG. 1, in a specific embodiment, both the mounting frame 110 and the water pocket 130 are made of flexible materials.

In the first aspect, the implementation of this embodiment can prevent the toy water ball 1000 from hurting or injuring the player, and eliminate potential safety hazards.

In the second aspect, the water pocket 130 of this embodiment can change the volume of the toy water ball 1000 through deformation, so as to achieve the technical effect of saving storage space, so as to facilitate storage by users.

In the third aspect, the implementation of this embodiment can reduce the probability of damage when the mounting frame 110 and the water pocket 130 are impacted, which is beneficial to improve the service life of the toy water ball 1000.

Referring to FIG. 1, in a specific embodiment, the mounting frame 110 and the water pocket 130 are made of silicone or rubber.

In order to improve the structural strength of the toy water ball 1000 and further avoid failure of the toy water ball 1000, the present application provides the following two embodiments for reference.

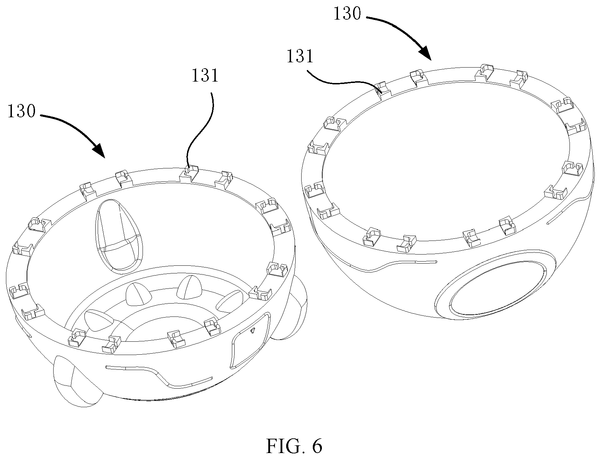

Referring to Fig. 3-Fig. 6 and Fig. 9, in the first embodiment, the mounting frame 110 is also provided with a gap groove 114, the gap groove 114 is arranged on the periphery of the magnetic member 120 and the notch of the gap groove 114 is located on the first surface 111, A surrounding edge 115 surrounding the magnetic member 120 is formed between the accommodation groove 113 and the gap groove 114, and the water pocket 130 is provided with an embedded portion 131 embedded in the gap groove 114.

Specifically, when the user uses the toy water ball 1000, it is inevitable that the water pocket 130 will be pulled, because when the magnetic members 120 of the adjacent shells 100 attract each other, the magnetic members 120 will apply force to limit that the adjacent shells 100 are pulled apart. Therefore, when the water pocket 130 is pulled, the position of the water pocket 130 adjacent to the magnetic member 120 will be subjected to a relatively large force, and it is easy to break away from the connection relationship with the mounting frame 110. In order to solve this technical problem, the water pocket 130 of this embodiment is partially embedded in the gap groove 114 between the groove wall of the accommodation groove 113 and the surrounding edge 115, so that the connection relationship of the position where the water pocket 130 is subjected to a relatively large force with the mounting frame 110 will be closer. It can be seen that, by implementing this embodiment, the structural strength of the toy water ball 1000 can be improved so that it will not be easily damaged.

When the toy water ball 1000 of this embodiment is produced, a slot will be opened on the mold for making the mounting frame 110, and the magnetic member 120 will be installed in this slot, and then the materials used to manufacture the mounting frame 110 will be pressed onto the mold so as to manufacture the mounting frame 110 equipped with the magnetic members 120, and finally process the water pocket 130 onto the mounting frame 110. Specifically, as long as the outline of the slot is set larger than the magnetic member 120, the manufactured mounting frame 110 will be formed with the above-mentioned gap groove 114 and surrounding edge 115.

Specifically, there are many shapes of the surrounding edge 115, which may be circular, oval, square, etc., so this embodiment does not limit it here.

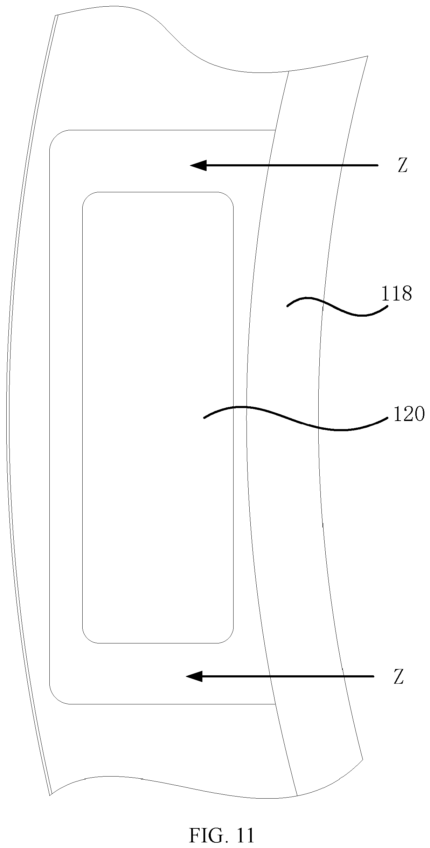

Referring to FIG. 11, in the second embodiment, the outline of the magnetic member 120 is smaller than the outline of the accommodation groove 113, so that there is a gap between the magnetic member 120 and the groove wall of the accommodation groove 113 (position Z in FIG. 11), and the water pocket 130 is partially embedded in the gap.

Specifically, when the user uses the toy water ball 1000, it is inevitable to pull the water pocket 130. When the magnetic members 120 of adjacent shells 100 attract each other, the magnetic members 120 will apply force to limit the adjacent shells 100 from being pulled apart, so when the water pocket 130 is pulled, the force of the position of the water pocket 130 adjacent to the magnetic member 120 will be relatively large, and it is easy to break away from the connection relationship with the mounting frame 110. In order to solve this technical problem, the water pocket 130 of this embodiment is partially embedded in the gap between the magnetic member 120 and the groove wall of the accommodation groove 113, so that the connection relationship between the position of the water pocket 130 where the force is greater and the mounting frame 110 will be closer. It can be seen that, by implementing this embodiment, the structural strength of the toy water ball 1000 can be improved so that it will not be easily damaged.

When making the toy water ball 1000 of this embodiment, a mounting frame 110 with a accommodation groove 113 is processed first, then the magnetic member 120 is placed in the groove, and finally the water pocket 130 is processed onto the mounting frame 110.

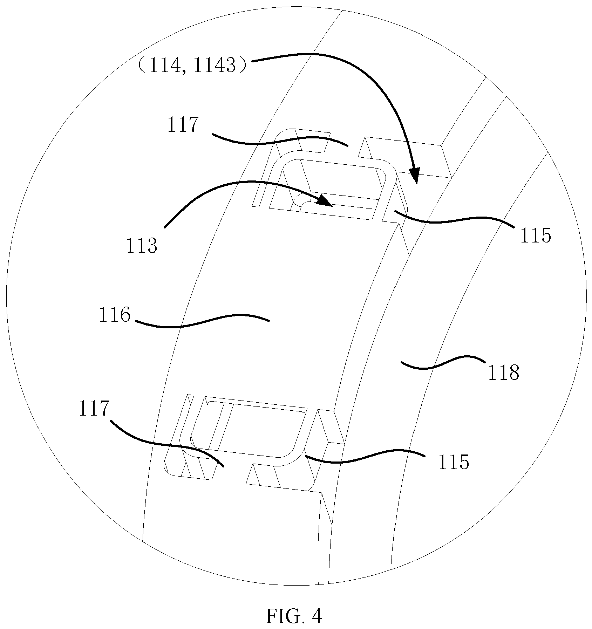

Referring to Fig. 4, in a specific embodiment, the surrounding edge 115 is arranged around the magnetic member 120, that is, the surrounding edge 115 wraps the outer peripheral surface of the magnetic member 120, so that not only the constraint of the mounting frame 110 on the magnetic member 120 can be strengthened, making the connection between the magnetic member 120 and the mounting frame 110 closer, but also it is convenient for processing.

Specifically, if the magnetic member 120 cannot move in the slot when the magnetic member 120 is installed in the slot of the mold, then when the material for manufacturing the mounting frame 110 is pressed onto the mold, the magnetic member 120 may be stressed to come out of the slot, which will cause defective products if it is light, or damage the mold if it is serious. The surrounding edge 115 is arranged around the magnetic member 120, which means that the magnetic member 120 can move in the slot. When the magnetic member 120 is stressed, it will move in the slot and will not easily come out of the slot, which can not only improve the yield rate, but also does not damage the mold.

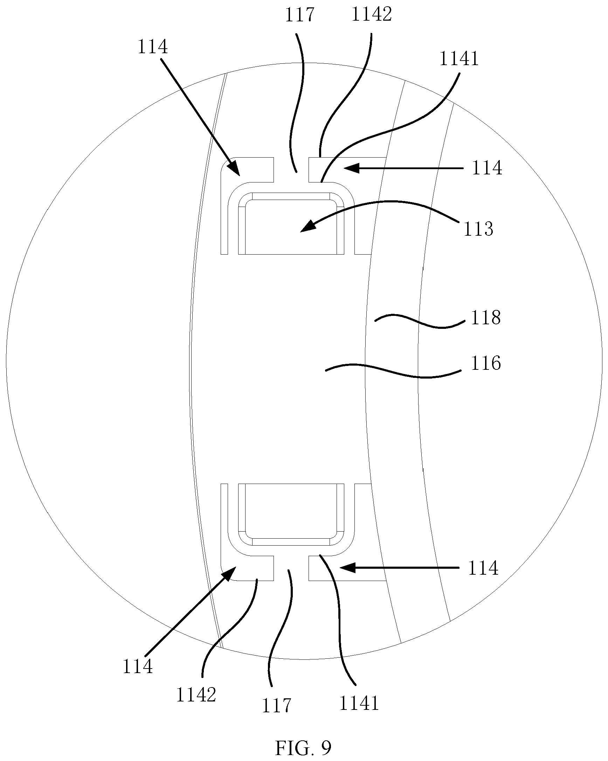

Referring to FIG. 9, in one embodiment, the gap groove 114 is disposed close to the end of the magnetic member 120, and both ends of the gap groove 114 extend from the direction parallel to the end of the magnetic member 120 and to turn to the direction of the side surface of the magnetic member 120. In this way, the connection relationship between the embedded portion 131 and the mounting frame 110 will be closer. The structural strength of the toy water ball 1000 can be further improved so that it will not be easily damaged.

Referring to Fig. 4, in a specific embodiment, the mounting frame 110 also includes a limiting baffle 116, the limiting baffle 116 is arranged at the notch of the accommodation groove 113, and is opposite to the groove bottom of the accommodation groove 113.

Specifically, the limiting baffle 116 can cooperate with the surrounding edge 115 to firmly limit the magnetic member 120 in the accommodation groove.

Referring to FIG. 4, in order to improve the limiting effect of the limiting baffle 116 on the magnetic member 120, in a specific embodiment, in the length direction of the accommodation groove 113, the limiting baffle 116 is set in the middle position of the notch of the accommodation groove 113, so that the middle position of the magnetic member 120 is covered by the limiting baffle 116, and the two ends of the magnetic member 120 are exposed from the notch.

Referring to Fig. 9, in a specific embodiment, the gap groove 114 includes a first groove wall 1141 on one side of the surrounding edge 115, and a second groove wall 1142 opposite to the first groove wall 1141, and the mounting frame 110 is also provided with connection ribs 117, the connection ribs 117 connect the first groove wall 1141 and the second groove wall 1142.

Specifically, when the user uses the toy water ball 1000, it is inevitable that the water pocket 130 will be pulled, because when the magnetic members 120 of the adjacent shells 100 attract each other, the magnetic members 120 will apply force to limit that the adjacent shells 100 are pulled apart. Therefore, when the water pocket 130 is pulled, the part of the mounting frame 110 near the magnetic member 120 will be subjected to a relatively large force, which will cause a large deformation of this part and be easily damaged. In order to solve this technical problem, the mounting frame 110 of this embodiment is provided with a connection rib 117, the connection rib 117 connects the first groove wall 1141 and the second groove wall 1142 of the gap groove 114, and the connection rib 117 can be used to apply a reaction force when the user pulls the water pocket 130, thereby reducing the degree of deformation of the part of the mounting frame 110 near the magnetic member 120. It can be seen that, by implementing this embodiment, the structural strength of the toy water ball 1000 can be improved, making the toy water ball 1000 durable.

In addition, when the water pocket 130 is processed on the mounting frame 110, the mounting frame 110 may be deformed accordingly. Exemplarily, when the water pocket 130 is processed on the mounting frame 110, when the raw material enters the gap groove 114, it will exert a force in the opposite direction on the first groove wall 1141 and the second groove wall 1142. If the force is too large, the distance between the first groove wall 1141 and the second groove wall 1142 will be changed by this force, thus causing the mounting frame 110 to deform, and if the deformation is too large, it will become a defective product, while the connection rib 117 of this embodiment can strengthen the constraint between the first groove wall 1141 and the second groove wall 1142 to avoid excessive deformation of the mounting frame 110 when the water pocket 130 is processed on the mounting frame 110, thereby improving the yield rate.

In a specific embodiment, the connection ribs 117 are also connected to the groove bottom 1143 of the gap groove 114, so that the connection ribs 117 will be less deformed when stressed, which can further improve the structural strength of the toy water ball 1000 and make the toy water ball 1000 durable.

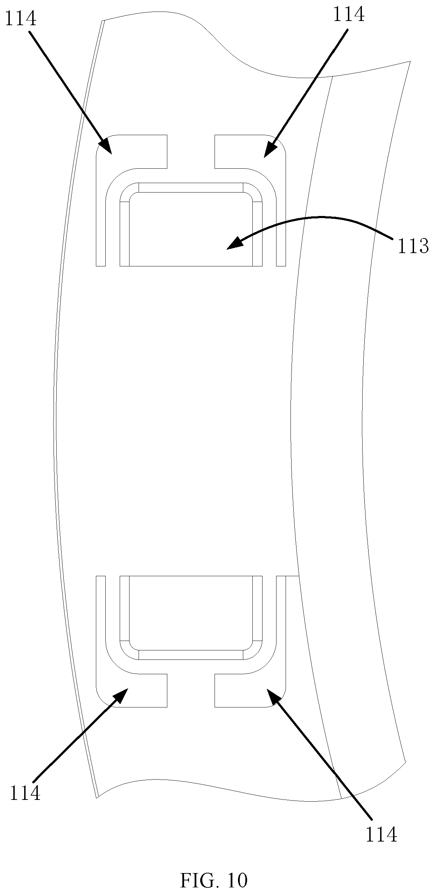

Referring to FIG. 10, in a specific embodiment, gap grooves 114 are provided at four corner positions of the magnetic member 120, and the gap grooves 114 are "L" shaped. In this way, the mounting frame 110 will include a plurality of connection ribs 117, and the plurality of connection ribs 117 are respectively located in different directions of the magnetic member 120, which can further prevent the mounting frame 110 from being excessively deformed when the water pocket 130 is processed on the mounting frame 110, thereby improving the yield rate.

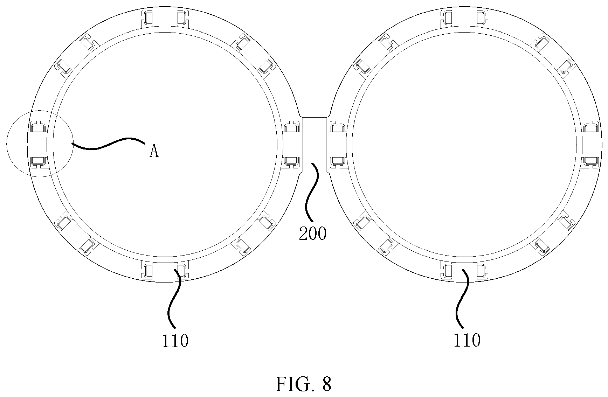

Referring to FIGS. 7-8, in an embodiment, the toy water ball 1000 further includes a connection structure 200, and each shell 100 is connected to the connection structure 200.

Specifically, it is conceivable that if there is no connection relationship between the shells 100 and they are scattered and out of order, it will be very cumbersome and time-consuming to assemble the shells 100 into a toy water ball 1000, and some shells are easy to get lost during the game. The connection structure 200 can connect the shells 100 together and simplify the assembly time of the toy water ball 1000.

Referring to FIGS. 1-3, in a specific embodiment, the connection structure 200 is made of flexible material, and the connection structure 200 is integrally formed with the mounting frame 110.

Specifically, the connection structure 200 made of flexible material can prevent the toy water ball 1000 from hurting or injuring the player, and the integral formation of the connection structure 200 and the mounting frame 110 can simplify the assembly steps.

Referring to FIGS. 1-3, the connection structure 200 and the mounting frame 110 in FIGS. 1-3 are both made of silica gel. Specifically, the raw material is pressed into a corresponding mold and formed integrally to form the connection structure 200 and the mounting frame 110. The toy water ball 1000 is very convenient to use, as long as one of the shells 100 is moved toward another shell 100, the water storage cavity can be enclosed and defined.

Of course, it can be understood that the connection structure 200 can also be a component independent of the mounting frame 110, just like the toy water ball 1000 shown in the drawings.

Referring to FIG. 4 and FIG. 9, in one embodiment, the inner circle of the mounting frame 110 is provided with a warped edge 118 at a position close to the second surface 112, and the warped edge 118 extends toward a direction close to the center of the mounting frame 110 and away from the first surface 111, and the included angle between the warped edge 118 and the plane where the second surface 112 is located is ≥ 5 degrees, when the second surfaces 112 of the adjacent mounting frames 110 abut each other, the corresponding warped edges 118 on the adjacent mounting frames 110 fit each other under pressure.

Specifically, because the warped edge 118 extends toward a direction close to the center of the mounting frame 110 and away from the first surface 111, the warped edge 118 of the shells 100 have already contacted each other before the second surfaces 112 of the shells 100 abut each other. When the second surfaces 112 of the shells 100 abut each other, the warped edges 118 of the shells 100 have been pressed against each other and elastically deformed, so setting the warped edges 118 can better limit the overflow of the water in the water storage cavity to avoid water leakage from the toy water ball 1000.

In one embodiment, the toy water ball further includes a light-emitting assembly, which is arranged inside the shells, and the light-emitting assembly includes a lamp bead, a controller, a vibration sensor, and a battery for powering the light bead, the controller and the vibration sensor. The controller controls the lamp bead to work when the vibration sensor detects vibration.

Specifically, when the toy water ball hits a human body or an object, it will trigger a vibration sensor, and the vibration sensor will feed it back to the controller, and the controller will control the lamp bead to work when it receives the feedback information from the vibration sensor. By implementing this embodiment, the aesthetics of the toy water ball can be increased, especially in the evening and night, the luminous toy water ball will look very beautiful.

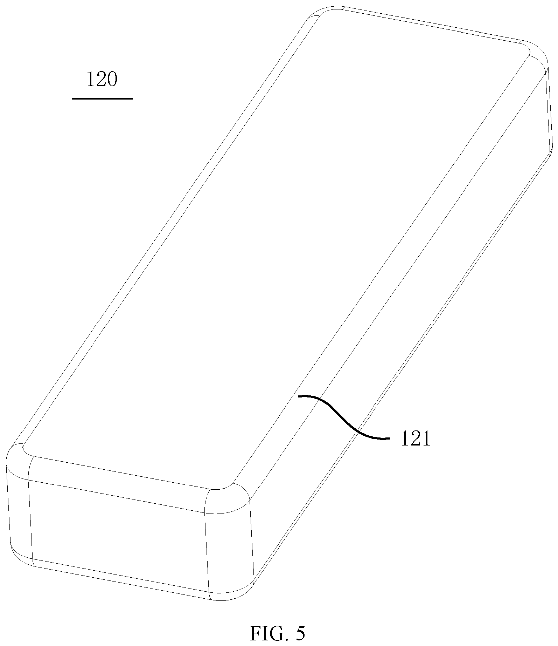

Referring to FIG. 5, in an embodiment, the edge of the magnetic member 120 is provided with a round chamfer 121.

Specifically, when the user uses the toy water ball 1000, it is inevitable that the water pocket 130 will be pulled. Since the magnetic members 120 of the shells 100 attract each other, when the user pulls the water pocket 130, the magnetic member 120 will exert a reverse force on the mounting frame 110 to deform the groove bottom 1143 of the accommodation groove 113. If the edge of the magnetic member 120 is relatively sharp, the groove bottom 1143 of the accommodation groove 113 is easily scratched by the magnetic member 120 at this time, causing the toy water ball 1000 to fail. Therefore, in this embodiment, the edge of the magnetic member 120 is provided with the round chamfer 121 to prevent the magnetic member 120 from scratching the groove bottom 1143 of the accommodation groove 113.

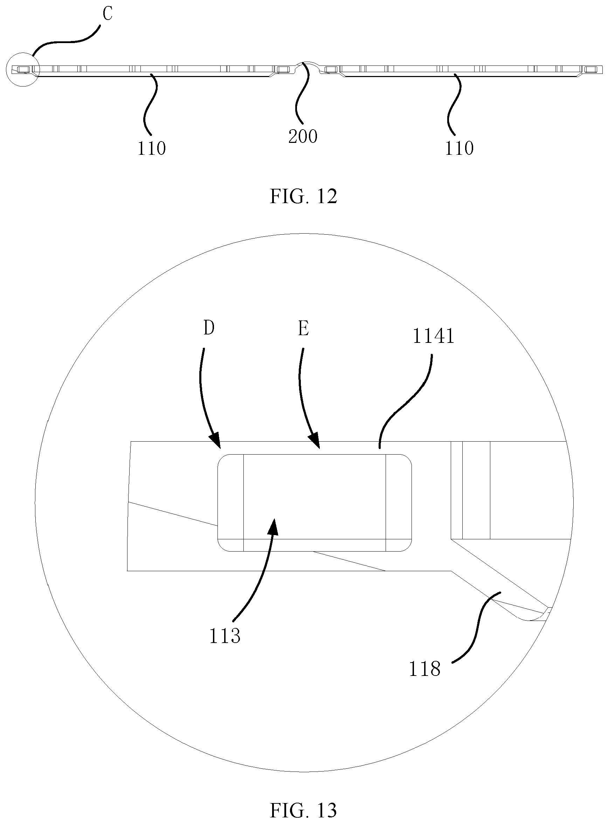

In addition, the round chamfer 121 on the edge of the magnetic member 120 can also make the connection position between the limiting baffle 116 and the surrounding edge 115 thicker. Referring to Figure 12 and Figure 13, the position D in Figure 13 is thicker than the position E, In this way, the structural strength of the limiting baffle 116 will be relatively large, and it will not be damaged so easily.

In one embodiment, an adhesive layer is disposed between the magnetic member 120 and the accommodation groove 113. In this way, the displacement of the magnetic member 120 can be avoided when the water pocket 130 is processed on the mounting frame 110.

In one embodiment, when the water pocket 130 is connected to the first surface 111, a covering layer is formed on the first surface 111, the thickness of the covering layer is ≥0.3 mm, and the thickness from the bottom of the accommodation groove 113 to the second surface 112 is ≥0.3 mm. The thickness of the mounting frame 110 is greater than or equal to 2 mm, so that the structural strength of the shells 100 will be better, making the toy water ball 1000 durable.

## Claims

1. A toy water ball, comprising:
at least two shells (100) that are enclosable to form a water storage cavity, each of the shells comprising:
a mounting frame (110), a magnetic member (120) and a water pocket (130),
the mounting frame (110) comprising a first surface (111) and a second surface (112) oppositely arranged in a thickness direction thereof,
the mounting frame (110) being provided with an accommodation groove (113),
the magnetic member (120) being installed in the accommodation groove (113), and
the water pocket (130) being connected to the first surface (111);
wherein when the shells (100) are enclosed to form the water storage cavity, magnetic members (120) at corresponding positions on mounting frames (110) of adjacent shells attract each other, so that second surfaces (112) of adjacent mounting frames (110) abut each other, and
a notch of the accommodation groove (113) is located on the first surface (111),
**characterized in that**
the water pocket (130) covers the notch of the accommodation groove (113) on the first surface (111) to seal the magnetic member (120) in the mounting frame (110), and
the mounting frame (110) further includes a limiting baffle (116), wherein the limiting baffle (116) is arranged at the notch of the accommodation groove (113) and is opposite to a groove bottom of the accommodation groove (113) to cover the magnetic member (120).

2. The toy water ball according to claim 1, wherein both the mounting frame (110) and the water pocket (130) are made of flexible materials.

3. The toy water ball according to claim 1 or 2, wherein the mounting frame (110) is further provided with a gap groove (114), the gap groove (114) is arranged on a periphery of the magnetic member (120) and a notch of the gap groove (114) is located on the first surface (111), a surrounding edge (115) is formed between the accommodation groove (113) and the gap groove (114) to surround the magnetic member (120), and the water pocket (130) is provided with an embedded part embedded in the gap groove (114).

4. The toy water ball according to claim 3, wherein the gap groove (114) is located at a position close to an end of the magnetic member (120), and two ends of the gap groove (114) extend from a direction parallel to the end of the magnetic member (120) and to turn to a direction of a side surface of the magnetic member (120).

5. The toy water ball according to any one of claims 1 to 4, wherein in a length direction of the accommodation groove (113), the limiting baffle (116) is arranged at a middle position of the notch of the accommodation groove (113), so that a middle position of the magnetic member (120) is covered by the limiting baffle, and two ends of the magnetic member (120) are exposed from the notch of the accommodation groove (113).

6. The toy water ball according to claim 3, wherein the gap groove (114) comprises a first groove wall (1141) located on one side of the surrounding edge and a second groove wall (1142) opposite to the first groove wall, the mounting frame (110) is further provided with a connection rib (117), and the connection rib (117) connects the first groove wall (1141) and the second groove wall (1142).

7. The toy water ball according to any one of claims 1-6, wherein four corner positions of the magnetic member (120) are all provided with gap grooves (114), and each gap groove is "L" shaped.

8. The toy water ball according to any one of claims 1-7, wherein an inner ring of the mounting frame (110) is provided with a warped edge (118) at a position close to the second surface (112), and the warped edge (118) extends towards a direction close to a center of the mounting frame (110) and away from the first surface (111), and an angle between the warped edge (118) and a plane where the second surface (112) is located is ≥ 5 degrees, when the second surfaces (112) of the adjacent mounting frames (110) abut each other, corresponding warped edges (118) of the adjacent mounting frames (110) fit each other under pressure.

9. The toy water ball according to any one of claims 1-8, further comprising a light-emitting assembly, wherein the light-emitting assembly is arranged inside the shells (100), and the light-emitting assembly comprises a lamp bead, a controller, a vibration sensor, and a battery for powering the lamp bead, the controller and the vibration sensor; the controller controls the lamp bead to work when the vibration sensor detects vibration.

10. The toy water ball according to any one of claims 1-9, wherein an edge of the magnetic member (120) is provided with a round chamfer (121).

11. The toy water ball according to any one of claims 1-10, wherein an adhesive layer is provided between the magnetic member (120) and the accommodation groove (113).

12. The toy water ball according to any one of claims 1-11, wherein when the water pocket (130) is connected to the first surface (111), a covering layer is formed on the first surface, and a thickness of the covering layer is ≥0.3 mm, a thickness from a bottom of the accommodation groove (113) to the second surface (112) is ≥0.3 mm, and a thickness of the mounting frame (110) is ≥2 mm.

## Patentansprüche

1. Spielwasserball, umfassend:
zumindest zwei Schalen (100), die einschließbar sind, um einen Wasserspeicherhohlraum zu bilden, wobei jede der Schalen Folgendes umfasst:
einen Montagerahmen (110), ein Magnetelement (120) und eine Wassertasche (130),
wobei der Montagerahmen (110) eine erste Oberfläche (111) und eine zweite Oberfläche (112),
die in einer Dickenrichtung davon gegenüber angeordnet ist, umfasst,
wobei der Montagerahmen (110) mit einer Aufnahmerille (113) bereitgestellt ist,
das Magnetelement (120) in der Aufnahmerille (113) installiert ist und
die Wassertasche (130) mit der ersten Oberfläche (111) verbunden ist;
wobei, wenn die Schalen (100) eingeschlossen sind, um den Wasserspeicherhohlraum zu bilden, Magnetelemente (120) an entsprechenden Positionen an Montagerahmen (110) von benachbarten Schalen einander anziehen, sodass zweite Oberflächen (112) von benachbarten Montagerahmen (110) aneinander anliegen, und
sich eine Kerbe der Aufnahmerille (113) auf der ersten Oberfläche (111) befindet,
**dadurch gekennzeichnet, dass**
die Wassertasche (130) die Kerbe der Aufnahmerille (113) auf der ersten Oberfläche (111) bedeckt, um das Magnetelement (120) in dem Montagerahmen (110) abzudichten, und
der Montagerahmen (110) ferner eine Begrenzungsplatte (116) beinhaltet, wobei die Begrenzungsplatte (116) an der Kerbe der Aufnahmerille (113) angeordnet ist und gegenüber einem Rillenboden der Aufnahmerille (113) ist, um das Magnetelement (120) zu bedecken.

2. Spielwasserball nach Anspruch 1, wobei sowohl der Montagerahmen (110) als auch die Wassertasche (130) aus flexiblen Materialien bestehen.

3. Spielwasserball nach Anspruch 1 oder 2, wobei der Montagerahmen (110) ferner mit einer Spaltrille (114) bereitgestellt ist, die Spaltrille (114) an einem Umfang des Magnetelements (120) angeordnet ist und sich eine Kerbe der Spaltrille (114) auf der ersten Oberfläche (111) befindet, eine umgebende Kante (115) zwischen der Aufnahmerille (113) und der Spaltrille (114) gebildet ist, um das Magnetelement (120) zu umgeben, und die Wassertasche (130) mit einem eingebetteten Teil bereitgestellt ist, das in der Spaltrille (114) eingebettet ist.

4. Spielwasserball nach Anspruch 3, wobei sich die Spaltrille (114) an einer Position nahe einem Ende des Magnetelements (120) befindet und sich zwei Enden der Spaltrille (114) von einer Richtung parallel zu dem Ende des Magnetelements (120) erstrecken, und um sich in eine Richtung einer Seitenoberfläche des Magnetelements (120) zu drehen.

5. Spielwasserball nach einem der Ansprüche 1 bis 4, wobei in einer Längsrichtung der Aufnahmerille (113) die Begrenzungsplatte (116) an einer Mittelposition der Kerbe der Aufnahmerille (113) angeordnet ist, sodass eine Mittelposition des Magnetelements (120) durch die Begrenzungsplatte bedeckt ist und zwei Enden des Magnetelements (120) von der Kerbe der Aufnahmerille (113) freiliegen.

6. Spielwasserball nach Anspruch 3, wobei die Spaltrille (114) eine erste Rillenwand (1141), die sich auf einer Seite der umgebenden Kante befindet, und eine zweite Rillenwand (1142) gegenüber der ersten Rillenwand umfasst, der Montagerahmen (110) ferner mit einer Verbindungsrippe (117) bereitgestellt ist und die Verbindungsrippe (117) die erste Rillenwand (1141) und die zweite Rillenwand (1142) verbindet.

7. Spielwasserball nach einem der Ansprüche 1-6, wobei vier Eckpositionen des Magnetelements (120) alle mit Spaltrillen (114) bereitgestellt sind und jede Spaltrille "L"-förmig ist.

8. Spielwasserball nach einem der Ansprüche 1-7, wobei ein Innenring des Montagerahmens (110) mit einer verzogenen Kante (118) an einer Position nahe der zweiten Oberfläche (112) bereitgestellt ist und sich die verzogene Kante (118) zu einer Richtung nahe einem Zentrum des Montagerahmens (110) und weg von der ersten Oberfläche (111) erstreckt und ein Winkel zwischen der verzogenen Kante (118) und einer Ebene, in der sich die zweite Oberfläche (112) befindet, ≥ 5 Grad ist, wobei, wenn die zweiten Oberflächen (112) der benachbarten Montagerahmen (110) aneinander anliegen, entsprechende verzogene Kanten (118) der benachbarten Montagerahmen (110) unter Druck aneinander passen.

9. Spielwasserball nach einem der Ansprüche 1-8, ferner umfassend eine Lichtemissionsbaugruppe, wobei die Lichtemissionsbaugruppe innerhalb der Schalen (100) angeordnet ist und die Lichtemissionsbaugruppe eine Lampenkugel, eine Steuerung, einen Vibrationssensor und eine Batterie zum Antreiben der Lampenkugel, der Steuerung und des Vibrationssensors umfasst; wobei die Steuerung die Lampenkugel so steuert, dass sie arbeitet, wenn der Vibrationssensor Vibration detektiert.

10. Spielwasserball nach einem der Ansprüche 1-9, wobei eine Kante des Magnetelements (120) mit einer runden Fase (121) bereitgestellt ist.

11. Spielwasserball nach einem der Ansprüche 1-10, wobei eine Klebstoffschicht zwischen dem Magnetelement (120) und der Aufnahmerille (113) bereitgestellt ist.

12. Spielwasserball nach einem der Ansprüche 1-11, wobei, wenn die Wassertasche (130) mit der ersten Oberfläche (111) verbunden ist, eine Deckschicht auf der ersten Oberfläche gebildet ist und eine Dicke der Deckschicht ≥0,3 mm ist, eine Dicke von einem Boden der Aufnahmerille (113) zu der zweiten Oberfläche (112) ≥0,3 mm ist und eine Dicke des Montagerahmens (110) ≥2 mm ist.

## Revendications

1. Ballon d'eau jouet, comprenant :
au moins deux coques (100) pouvant être enfermées pour former une cavité de stockage d'eau, chacune des coques comprenant :
un cadre de montage (110), un élément magnétique (120) et une poche d'eau (130),
le cadre de montage (110) comprenant une première surface (111) et une seconde surface (112) agencées de manière opposée dans un sens de l'épaisseur de celui-ci,
le cadre de montage (110) étant pourvu d'une rainure de réception (113),
l'élément magnétique (120) étant installé dans la rainure de réception (113), et
la poche d'eau (130) étant connectée à la première surface (111) ;
dans lequel, lorsque les coques (100) sont enfermées pour former la cavité de stockage d'eau, les éléments magnétiques (120) à des positions correspondantes sur les cadres de montage (110) des coques adjacentes s'attirent les uns les autres, de sorte que les secondes surfaces (112) des cadres de montage adjacents (110) viennent en butée les unes contre les autres, et
une encoche de la rainure de réception (113) est située sur la première surface (111),
**caractérisé en ce que**
la poche d'eau (130) recouvre l'encoche de la rainure de réception (113) sur la première surface (111) pour sceller l'élément magnétique (120) dans le cadre de montage (110), et
le cadre de montage (110) comprend en outre un déflecteur de limitation (116), dans lequel le déflecteur de limitation (116) est agencé au niveau de l'encoche de la rainure de réception (113) et est opposé à un fond de rainure de la rainure de réception (113) pour recouvrir l'élément magnétique (120).

2. Ballon d'eau jouet selon la revendication 1, dans lequel à la fois le cadre de montage (110) et la poche d'eau (130) sont faits de matériaux flexibles.

3. Ballon d'eau jouet selon la revendication 1 ou 2, dans lequel le cadre de montage (110) est en outre pourvu d'une rainure d'espacement (114), la rainure d'espacement (114) est agencée sur une périphérie de l'élément magnétique (120) et une encoche de la rainure d'espacement (114) est située sur la première surface (111), un bord périphérique (115) est formé entre la rainure de réception (113) et la rainure d'espacement (114) pour entourer l'élément magnétique (120), et la poche d'eau (130) est pourvue d'une partie intégrée intégrée dans la rainure d'espacement (114).

4. Ballon d'eau jouet selon la revendication 3, dans lequel la rainure d'espacement (114) est située au niveau d'une position proche d'une extrémité de l'élément magnétique (120), et deux extrémités de la rainure d'espacement (114) s'étendent à partir d'une direction parallèle à l'extrémité de l'élément magnétique (120) et pour tourner dans une direction d'une surface latérale de l'élément magnétique (120).

5. Ballon d'eau jouet selon l'une quelconque des revendications 1 à 4, dans lequel dans le sens de la longueur de la rainure de réception (113), le déflecteur de limitation (116) est agencé au niveau d'une position médiane de l'encoche de la rainure de réception (113), de sorte qu'une position médiane de l'élément magnétique (120) soit recouverte par le déflecteur de limitation, et deux extrémités de l'élément magnétique (120) soient exposées à partir de l'encoche de la rainure de réception (113).

6. Ballon d'eau jouet selon la revendication 3, dans lequel la rainure d'espacement (114) comprend une première paroi de rainure (1141) située sur un côté du bord périphérique et une seconde paroi de rainure (1142) opposée à la première paroi de rainure, le cadre de montage (110) est en outre pourvu d'une nervure de raccordement (117), et la nervure de raccordement (117) raccorde la première paroi de rainure (1141) et la seconde paroi de rainure (1142).

7. Ballon d'eau jouet selon l'une quelconque des revendications 1 à 6, dans lequel quatre positions en coin de l'élément magnétique (120) sont toutes pourvues de rainures d'espacement (114), et chaque rainure d'espacement est en forme de "L".

8. Ballon d'eau jouet selon l'une quelconque des revendications 1 à 7, dans lequel un anneau interne du cadre de montage (110) est pourvu d'un bord déformé (118) à une position proche de la seconde surface (112), et le bord déformé (118) s'étend vers une direction proche d'un centre du cadre de montage (110) et à distance de la première surface (111), et un angle entre le bord déformé (118) et un plan où se trouve la seconde surface (112) est ≥ 5 degrés, lorsque les secondes surfaces (112) des cadres de montage adjacents (110) viennent en butée les unes contre les autres, les bords déformés correspondants (118) des cadres de montage adjacents (110) s'adaptent les uns aux autres sous pression.

9. Ballon d'eau jouet selon l'une quelconque des revendications 1 à 8, comprenant en outre un ensemble électroluminescent, dans lequel l'ensemble électroluminescent est agencé à l'intérieur des coques (100), et l'ensemble électroluminescent comprend un élément LED, un contrôleur, un capteur de vibration et une batterie pour alimenter l'élément LED, le contrôleur et le capteur de vibration ; le contrôleur commande l'élément LED pour qu'il fonctionne lorsque le capteur de vibration détecte une vibration.

10. Ballon d'eau jouet selon l'une quelconque des revendications 1 à 9, dans lequel un bord de l'élément magnétique (120) est pourvu d'un chanfrein rond (121).

11. Ballon d'eau jouet selon l'une quelconque des revendications 1 à 10, dans lequel une couche adhésive est prévue entre l'élément magnétique (120) et la rainure de réception (113).

12. Ballon d'eau jouet selon l'une quelconque des revendications 1 à 11, dans lequel lorsque la poche d'eau (130) est connectée à la première surface (111), une couche de couverture est formée sur la première surface, et une épaisseur de la couche de couverture est ≥ 0,3 mm, une épaisseur à partir d'un fond de la rainure de réception (113) vers la seconde surface (112) est ≥ 0,3 mm, et une épaisseur du cadre de montage (110) est ≥ 2 mm.
